**Europäisches Patentamt**

(19) **European Patent Office**

**Office européen des brevets**

(11) Numéro de publication: **0 076 749**
**A2**

(12) **DEMANDE DE BREVET EUROPEEN**

(21) Numéro de dépôt: **82401783.4**

(22) Date de dépôt: **30.09.82**

(51) Int. Cl.³: **B 60 R 13/06**

---

(30) Priorité: **01.10.81 DE 3139076**

(43) Date de publication de la demande:
**13.04.83 Bulletin 83/15**

(84) Etats contractants désignés:
**AT BE DE FR GB IT SE**

(71) Demandeur: **SAINT-GOBAIN VITRAGE**
**Les Miroirs 18, avenue d'Alsace**
**F-92400 Courbevoie(FR)**

(84) Etats contractants désignés:
**BE FR GB IT SE AT**

(71) Demandeur: **Vereinigte Glaswerke GmbH**
**Viktoria Allee 3-5**
**D-5100 Aachen(DE)**

(84) Etats contractants désignés:
**DE**

(72) Inventeur: **Kunert, Heinz**
**am Krieler Dom 23**
**D-5000 Köln 41(DE)**

(74) Mandataire: **Muller, René et al,**
**SAINT-GOBAIN RECHERCHE 39, quai Lucien Lefranc**
**F-93304 Aubervilliers(FR)**

---

(54) **Vitre munie d'un encadrement profilé de pourtour.**

(57) L'invention concerne une vitre (2), en particulier de véhicule, pourvue d'un encadrement profilé de pourtour en matière élastique de section transversale essentiellement en U, au moins un creux (4) qui s'étend sur le pourtour de la vitre (2) étant prévu entre la vitre (2) et l'encadrement profilé fait d'une moulure d'encadrement profilée (1) et pouvant être raccordé à une conduite d'aspiration (6).

_Fig. 1_

EP 0 076 749 A2

Croydon Printing Company Ltd.

VITRE MUNIE D'UN ENCADREMENT PROFILE DE POURTOUR

La présente invention concerne une vitre, en particulier une vitre pour véhicule, munie d'un encadrement profilé de pourtour en matière élastique de section essentiellement en U.

Pour diverses applications, il est important de réunir des encadrements profilés de ce type de manière étanche à la vitre. Ainsi, dans la construction automobile, pour réunir solidement des vitres, par exemple des pare-brise ou des lunettes arrière, à la carrosserie, on utilise des moulures d'encadrement profilées qui présentent des rainures opposées et espacées parallèlement l'une de l'autre pour recevoir les bords de la vitre et le rebord de la baie de fenêtre de la carrosserie. Des moulures d'encadrement profilées de ce type (document DE-OS 20 17 443) sont faites d'une matière élastique comme, par exemple, une matière plastique, ayant un volume appréciable pour pouvoir transmettre les forces de serrage nécessaires aux lèvres des rainures. Ces moulures d'encadrement profilées doivent, d'une part, assurer une étanchéité éprouvée contre l'humidité et, d'autre part, être si solides que, dans le cas où le véhicule subit un choc, la vitre ne soit projetée hors de son encadrement ni par suite de son inertie de masse, ni sous l'effet du choc des occupants du véhicule.

Des forces de pression considérables sont nécessaires pour monter de tels encadrements profilés sur la vitre. Dans les formes d'exécution connues, on n'est cependant pas assuré que l'encadrement profilé soit engagé en tout point sur le bord de la vitre assez loin pour que ce bord atteigne l'âme de la moulure d'encadrement profilée. A ceci s'ajoute le fait que la liaison entre la moulure d'encadrement profilée et la vitre doit être étanche à l'eau. A cet effet, une matière de calfatage est introduite en supplément dans le chenal en U de la moulure d'encadrement profilée. On pourrait, toutefois, renoncer à une telle matière de calfatage ou en réduire très fortement les quantités utilisées si l'on parvenait à coller l'encadrement profilé à la vitre au moyen d'une simple couche d'adhésif mince. Dans ce cas, aucune interruption de la jonction collée ne peut apparaître et cette jonction doit être la plus étendue possible.

Des couches d'adhésif, par exemple sur les surfaces des ailes de l'encadrement profilé tournées vers la vitre, compliquent cependant à nouveau le montage de l'encadrement profilé sur la vitre.

L'invention a pour but de procurer une vitre du type spécifié pour laquelle le montage de l'encadrement profilé soit facilité et garantisse une jonction étanche de tout côté entre l'encadrement et la vitre.

Au moyen d'un manchon communiquant avec la conduite d'aspiration, on peut, pendant la prise de l'adhésif, largement faire le vide dans le creux situé entre la vitre et la moulure d'encadrement profilée, grâce à quoi, pendant ce temps, les surfaces des lèvres enduites d'adhésif s'appliquent de manière étanche contre la vitre et rendent possible un collage satisfaisant.

L'invention a aussi l'avantage que la moulure d'encadrement profilée peut être moins volumineuse car la pression de serrage nécessaire est produite par le vide. Etant donné que, dans la réalisation conforme à l'invention, la jonction entre la vitre et le profilé d'encadrement peut être réalisée sans l'aide d'une force, les bords de la vitre sont aussi considérablement ménagés.

Des réalisations avantageuses de l'invention sont décrites dans les revendications 2 à 6 et seront expliquées ci-après avec référence aux exemples d'exécution représentés aux dessins annexés dans lesquels :

la Fig. 1 est une vue en coupe d'un montage de vitre et de moulure d'encadrement profilée;

les Fig. 2 à 5 sont des vues en coupe d'autres exemples de montage, et

les Fig. 6 et 7 illustrent une jonction d'une moulure d'encadrement profilée.

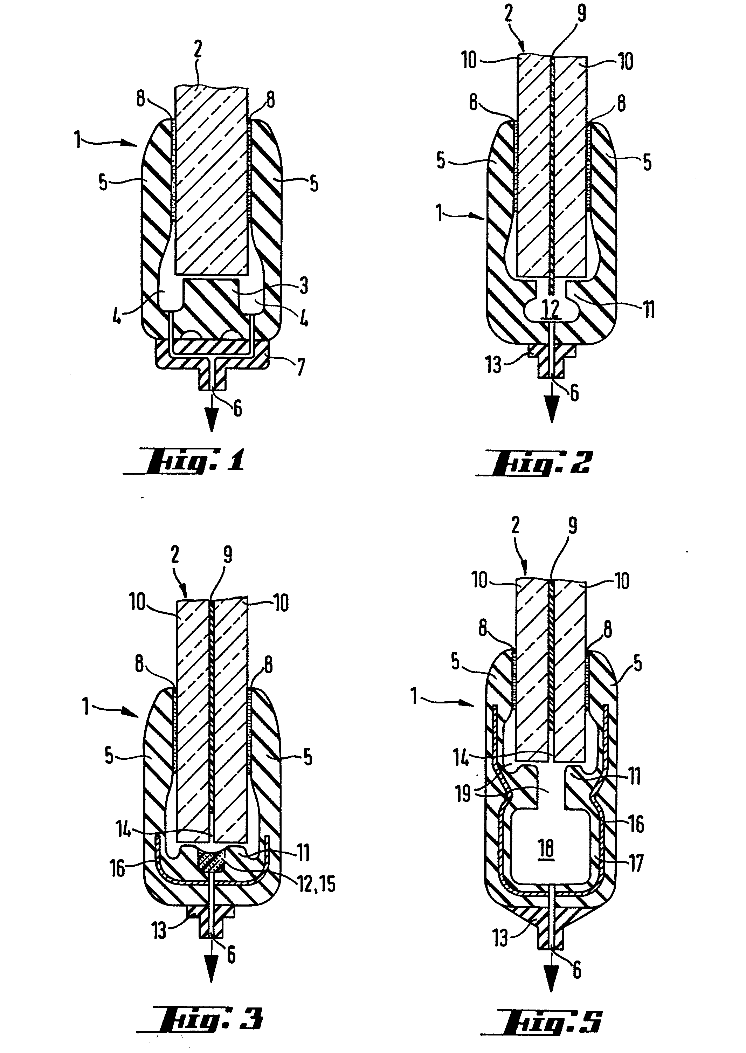

La Fig. 1 est une vue en coupe d'un premier montage d'une moulure d'encadrement profilée 1 de section en substance en U, faite d'une matière élastique comme, par exemple, une matière plastique, et d'une vitre 2 d'une fenêtre de véhicule. La vitre 2 est appliquée tout contre l'âme 3 de la moulure d'encadrement profilée 1 dont les lèvres latérales 5 sont appliquées sur la vitre 2. La moulure d'encadrement profilée 1 forme un encadrement profilé fermé autour de la vitre 2. Des rainures 4 sont prévues dans la moulure d'encadrement profilée 1 de chaque côté de l'âme 3. Un manchon 7 ou un élément analogue communiquant avec une conduite d'aspiration 6 et pouvant être posé sur la surface externe de la moulure d'encadrement profilée 1 permet de faire le vide dans l'espace formé par les rainures pendant l'opération de collage jusqu'à la prise complète de l'adhésif 8 et permet ainsi d'appliquer les lèvres 5 enduites d'adhésif de manière étanche contre les vitres.

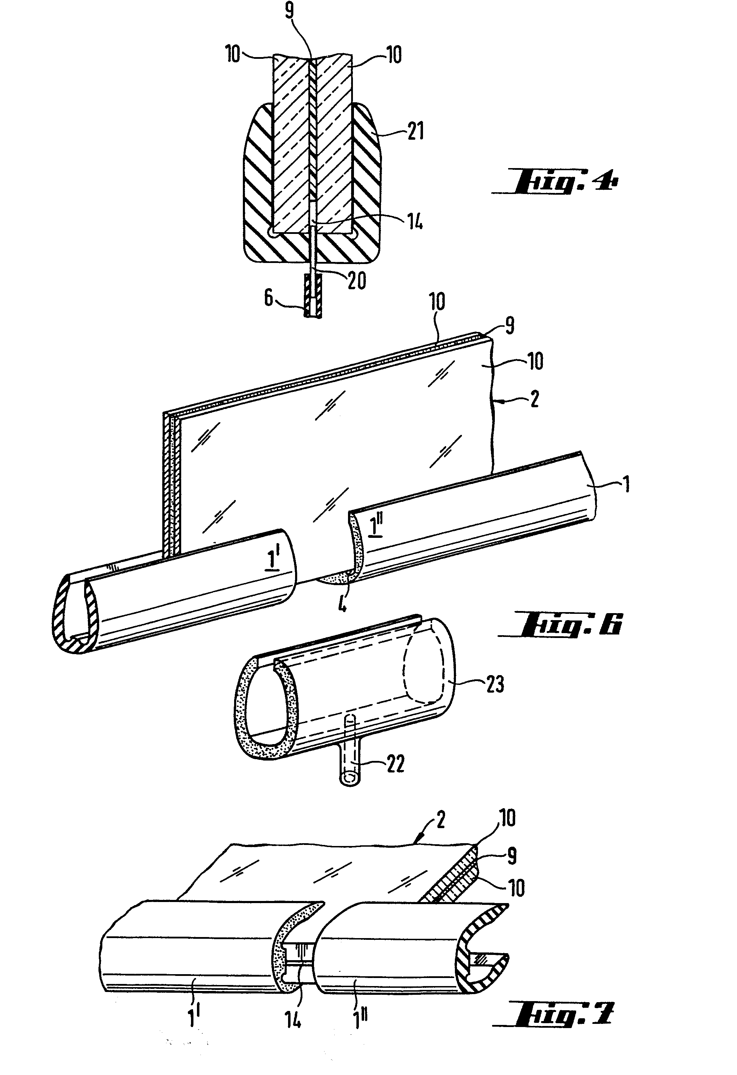

Le montage représenté sur la Fig. 2 comporte une moulure d'encadrement profilée 1 qui enferme une vitre en verre feuilleté 2. Cette vitre est formée de deux feuilles de verre 10 pressées contre une pellicule de matière plastique 9 et collées à celle-ci. L'âme 11 de la moulure d'encadrement profilée 1 présente une rainure médiane 12 qui est à même de recevoir également les parties dépassantes de la pellicule de matière plastique 9. Un manchon 13 raccordé à la conduite d'aspiration 6 vient en prise avec la surface extérieure de la moulure d'encadrement profilée 1.

La Fig. 3 illustre un autre montage d'une moulure d'encadrement profilée 1 et d'une vitre feuilletée 2 qui est à nouveau formée de feuilles de verre 10 et d'une pellicule de matière plastique 9 intercalaire. Dans ce cas, les dimensions extérieures de la pellicule de matière plastique 9 sont inférieures à celles des feuilles de verre 10 ce qui forme une rainure de pourtour 14 dans le corps de la vitre feuilletée 2.

L'âme 11 de la moulure d'encadrement profilée 1 présente une rainure médiane 12 destinée à recevoir une matière d'étanchéité ou de calfatage 15. Dans la rainure médiane 12 s'ouvre une conduite d'aspiration 6 introduite au moyen d'un manchon 13 posé de l'extérieur. Le vide appliqué d'une part assure l'application étanche mentionnée plus haut des lèvres 5 enduites d'adhésif 8 de la moulure d'encadrement profilée 1 et, d'autre part, attire la matière d'étanchéité 15 dans la rainure 14.

Dans la forme d'exécution représentée sur la Fig. 4, une moulure d'encadrement profilée de section en U courante 21 entoure une vitre en verre feuilleté 2 qui, comme le montre la Fig. 3, est faite de deux feuilles de verre individuelles 10 et d'une pellicule de matière thermoplastique intermédiaire 9 qui présente des dimensions extérieures inférieures à celles des feuilles de verre 10 de manière à délimiter une rainure annulaire 14.

Etant donné que la rainure suffit pour propager l'effet d'aspiration souhaité, on peut même renoncer à la matière d'étanchéité. Le raccordement de la rainure 14 à la conduite d'aspiration 6 s'effectue, par exemple, au moyen d'une aiguille creuse 20 que l'on enfonce à un endroit quelconque à travers la moulure d'encadrement profilée 21 et que l'on introduit dans la rainure 14.

La fig. 5 illustre une autre variante du montage conforme à l'invention. Elle réside dans le fait que la moulure d'encadrement profilée 1 est pourvue d'un bourrelet creux 17 supplémentaire, servant d'élément d'espacement pour l'adaptation aux tolérances dimensionnelles de la baie de la carrosserie, ce bourrelet se trouvant sur la face externe de l'âme 11 et étant renforcé par un squelette 16 en matière rigide en flexion. L'intérieur 18 du bourrelet creux est en communication ouverte avec le creux 19 entre la moulure d'encadrement profilée 1 et la vitre 2 qui peut être réalisée sous l'une de ses formes mentionnées plus haut. Un manchon 13 pourvu d'une conduite d'aspiration 6 est raccordé à l'intérieur du bourrelet creux 17 de la manière décrite plus haut.

Les fig. 6 et 7 illustrent une jonction d'une moulure d'encadrement profilée 1 qui est formée des deux extrémités 1' et 1" espacées d'une courte distance l'une de l'autre. La moulure d'encadrement profilée 1 est en prise avec une vitre feuilletée 2 comme sur la fig. 4. Un manchon 23 en matière élastique est glissé sur les extrémités 1' et 1". Ce manchon 23 s'applique de manière étanche sur la vitre 2 et sur les côtés extérieurs de la moulure d'encadrement profilée 1 et assure entièrement l'étanchéité de l'endroit de jonction. Il porte un raccord 22 auquel la conduite d'aspiration 6 peut être raccordée.

REVENDICATIONS

----------------------------

1.- Vitre, en particulier de véhicule, pourvue d'un encadrement profilé de pourtour en matière élastique de section en substance en U, caractérisée en ce qu'entre le corps en verre (2) et l'encadrement profilé fait d'une moulure d'encadrement profilée (1) est prévu au moins un creux (4, 12, 14, 19) qui s'étend sur tout le pourtour de la vitre (2) et qui peut être raccordé à une conduite d'aspiration (6).

2.- Vitre suivant la revendication 1, caractérisée en ce qu'au moins une rainure (4, 12) est prévue à titre de creux au moins au niveau de la face interne de l'âme (3, 11) de la moulure d'encadrement profilée (1).

3.- Vitre suivant la revendication 1 ou 2, caractérisée en ce qu'une rainure (14) prévue entre les feuilles de verre individuelles (10) faisant partie d'une vitre feuilletée (2) à titre de creux, est formée par le fait que la pellicule de matière plastique (9) collée entre les feuilles de verre (10) a des dimensions extérieures inférieures à celles des feuilles de verre (10).

4.- Vitre suivant l'une quelconque des revendications 1 à 3, caractérisée en ce que les lèvres (5) de la moulure d'encadrement profilée (1) appliquées contre les surfaces de la vitre (2) portent une couche d'adhésif (8).

5.- Vitre suivant l'une quelconque des revendications 1 à 4, caractérisée en ce que le creux (4, 12, 14, 19) est en communication ouverte avec un bourrelet creux (17) disposé à la face externe de l'âme (3, 11) de la moulure d'encadrement profilée (1) et relié rigidement à celle-ci.

6.- Vitre suivant l'une quelconque des revendications 1 à 5, caractérisée en ce que pour ponter la jonction de deux extrémités (1', 1") d'une moulure d'encadrement profilée (1) en deux parties, on glisse un manchon (23) en matière élastique sur ces extrémités (1', 1") et ce manchon s'applique par ses surfaces internes de manière étanche sur les surfaces externes de la vitre (2) et sur la moulure d'encadrement profilée (1), le manchon (23) présentant un raccord (22) pour une conduite d'aspiration (6).

**Fig. 1**

**Fig. 2**

**Fig. 3**

**Fig. 5**

*Fig. 4*

*Fig. 6*

*Fig. 7*